# FASCICULE DE BREVET EUROPEEN

(11) **EP 4 010 651 B1**
(45) Date de publication et mention de la délivrance du brevet: **30.04.2025**
(21) Numéro de dépôt: 20765203.3
(22) Date de dépôt: 06.08.2020
(51) Int. Cl.: F28D 20/00, F28D 17/00

(54) **DISPOSITIF DE STOCKAGE THERMIQUE AMÉLIORÉ**
VERBESSERTER WÄRMESPEICHER
IMPROVED HEAT STORAGE DEVICE

(30) Priorité: 08.08.2019 FR 1909070
(43) Date de publication de la demande: 15.06.2022
(73) Titulaire: Eco-Tech Ceram, 66100 Perpignan (FR)
(72) Inventeur: MEFFRE, Antoine, 66000 Perpignan (FR); DEJEAN, Guilhem, 66000 Perpignan (FR); BRUYÈRE, Davy, 17800 Montils (FR)
(74) Mandataire: Fache, Sébastien
(86) Numéro de dépôt international: PCT/EP2020/072173
(87) Numéro de publication internationale: WO 2021/023834

(56) Documents cités:
- EP-A1- 2 738 509
- EP-A1- 3 270 087
- FR-A1- 3 041 088
- US-A- 4 807 696

## Description

### DOMAINE TECHNIQUE DE L'INVENTION

Le domaine technique de l'invention est celui de l'économie d'énergie, plus particulièrement de la réutilisation de l'énergie thermique.

La présente invention concerne un dispositif de stockage thermique, c'est-à-dire de calories ou de frigories, en vue de leur restitution ultérieure.

### ARRIERE-PLAN TECHNOLOGIQUE DE L'INVENTION

Il existe des dispositifs permettant de stocker de la chaleur pour la réutiliser ultérieurement, par exemple après un transport du dispositif sur un autre site.

Classiquement, ces dispositifs comprennent un conteneur, par exemple un conteneur métallique, comportant un matériau à inertie thermique prévu pour emmagasiner et restituer de la chaleur. Ces dispositifs comprennent une interface d'entrée de fluide permettant d'introduire un fluide dans le dispositif afin de réaliser un échange thermique entre le fluide et le matériau à inertie thermique, et une interface de sortie de fluide pour extraire le fluide du dispositif après ledit échange thermique.

L'utilisation d'un dispositif de stockage thermique comporte classiquement deux phases.

Lors d'une première phase, ou phase de chargement, on fait circuler un fluide chaud dans le dispositif. Un échange thermique a lieu entre le fluide chaud et le matériau à inertie thermique, transférant une partie des calories du fluide chaud vers le matériau à inertie thermique.

Lors d'une deuxième phase, ou phase de restitution, on fait circuler un fluide froid dans le dispositif comportant le matériau à inertie thermique chargé en calories. Un échange thermique a lieu entre le matériau à inertie thermique et le fluide froid, transférant une partie des calories du matériau à inertie thermique vers le fluide froid qui se réchauffe alors.

Le matériau à inertie thermique peut prendre la forme d'une pluralité d'éléments de stockages indépendants, classiquement des billes d'un matériau réfractaire, par exemple des billes en céramique. Cela permet avantageusement d'obtenir une grande surface de contact entre le fluide et le matériau à inertie thermique.

Cependant, lors de la phase de chargement, il est fréquent que le conteneur se dilate sous l'effet de la chaleur, entrainant une augmentation du volume interne du conteneur. Si le coefficient de dilatation thermique du conteneur est supérieur à celui des éléments de stockage, un volume libre se crée lorsque ledit conteneur se dilate, et les éléments de stockages peuvent alors se réorganiser de façon à occuper l'espace supplémentaire libéré par la dilatation du conteneur. En d'autres termes, un tassement des éléments de stockage se produit dans le conteneur.

Une première conséquence défavorable du tassement des éléments de stockage se produit lors du refroidissement du conteneur durant lequel le conteneur tend à se rétracter afin de reprendre son volume initial. La nouvelle répartition des éléments de stockages contraint mécaniquement le conteneur en s'opposant à sa rétractation, générant donc des tensions mécaniques susceptibles d'endommager la structure du conteneur.

Une deuxième conséquence défavorable du tassement est une répartition inégale des éléments de stockage dans le conteneur. La répartition des éléments de stockage devient hétérogène, par exemple une densité plus importante dans la partie basse de la cuve, et moins importante dans la partie haute de la cuve. Par conséquent, l'espace entre les éléments de stockage est plus important dans la partie haute de la cuve et moins important dans la partie basse de la cuve.

Ainsi un passage préférentiel du fluide est formé dans la partie haute de la cuve conduisant donc à un mauvais transfert thermique entre le fluide et les éléments de stockage, en particulier entre le fluide et les éléments de stockage situés dans la partie basse de la cuve.

Une solution existante pour éviter le tassement des éléments de stockage consiste à isoler thermiquement les éléments de stockage de la paroi du conteneur afin de limiter la dilatation de la paroi, par exemple en tapissant l'intérieur du conteneur avec une couche thermiquement isolante. Cela étant, cette solution est coûteuse et complexe à mettre en oeuvre.

Des documents de l'état de la technique sont EP2738509A, EP3270087A, US4807696A.

Il convient donc d'éviter le tassement des éléments de stockage par des moyens simples.

### RESUME DE L'INVENTION

L'invention offre une solution aux problèmes évoqués précédemment en proposant une nouvelle structure de dispositif de stockage de chaleur dans laquelle le tassement des éléments de stockage est limité par des moyens simples.

Selon un aspect, il est proposé un dispositif de stockage de calories/frigories avec les caractéristiques de la revendication 1.

Selon une caractéristique générale de cet aspect, le conteneur comporte au moins une paroi interne ajourée comportant des jours de dimensions inférieures aux dimensions des éléments de stockage et définissant un premier compartiment et au moins un deuxième compartiment dans le conteneur, la pluralité d'éléments de stockage étant répartie dans le premier compartiment et dans ledit au moins un deuxième compartiment.

La variation absolue de volume dans chaque compartiment est inférieure à la variation absolue de volume de l'ensemble du dispositif. L'espace libéré dans chaque compartiment par la dilatation du conteneur est donc avantageusement insuffisante pour permettre une réorganisation complète des éléments de stockage.

En outre, la paroi ajourée permet avantageusement de maintenir une bonne circulation du fluide tout en réduisant la mobilité des éléments de stockage

Avantageusement, le système comprend une pluralité de ces parois ajourées.

Le dispositif peut comporter une couche thermiquement isolante disposée autour de la paroi du conteneur.

La présence d'une couche thermiquement isolante permet avantageusement d'éviter les pertes de chaleur vers l'extérieur du dispositif et donc d'en améliorer l'efficacité.

En outre, positionner la couche thermiquement isolante à l'extérieur du conteneur plutôt qu'à l'intérieur est particulièrement avantageux car cela est moins complexe et moins coûteux à réaliser.

Le conteneur peut être de forme cylindrique, ladite au moins une paroi interne étant perpendiculaire à l'axe du cylindre et/ou ladite au moins une paroi interne étant parallèle à l'axe du cylindre.

Il est ainsi possible de modifier la dimension des compartiments en longueur et/ou en hauteur.

Un cylindre est entendu ici comme un solide engendré par un segment de droite, dite droite génératrice, qui se déplace parallèlement à un axe entre deux plans fixes parallèles appelés bases du cylindre.

Ainsi un cylindre peut avoir des bases discoïdales, des bases ellipsoïdales ou des bases de forme quelconque. Un cylindre peut également avoir des bases polygonales et dans ce cas le cylindre est un prisme. En particulier, un cylindre avec des bases hexagonales permet un empilement optimal des éléments de stockage. Un cylindre dont les bases sont perpendiculaires à la droite génératrice est un cylindre droit.

La largeur de chaque compartiment peut être inférieure à 25 fois la dimension maximale d'un élément de stockage.

Cela permet d'obtenir une répartition optimale des parois et donc d'obtenir le meilleur compromis entre l'efficacité du dispositif et sa complexité.

Chaque élément de stockage présente une dimension maximale comprise en entre 10 millimètres et 50 millimètres.

Ces dimensions des éléments de stockages permettent le meilleur compromis entre la diminution de la perte de charge du fluide entre la première interface et la deuxième interface et l'augmentation du transfert thermique entre le fluide et les éléments de stockage.

Le dispositif comprend en outre au moins une ouverture de remplissage réalisée dans la paroi du conteneur au niveau le plus haut de la paroi du conteneur.

Ce trou de remplissage permet de remplir le conteneur avec les éléments de stockage.

Selon un mode de réalisation, le dispositif comporte au moins un trou de vidange réalisé dans la paroi du conteneur au niveau le plus bas de la paroi du conteneur.

Lorsqu'un fluide chaud entre en contact avec les éléments de stockage froid, de la condensation peut se former. Selon la nature du fluide, le condensat peut être corrosif. La présence d'un trou de vidange au niveau le plus bas de la paroi du conteneur, c'est-à-dire au fond du conteneur, permet avantageusement d'évacuer les condensats qui vont s'écouler par gravité hors du dispositif.

Chaque compartiment peut comporter un ou plusieurs trou(s) de vidange.

Selon un aspect, il est proposé un système de gestion des condensats comprenant un siphon comportant un tuyau ayant une première extrémité apte à être couplée à un trou de vidange et une deuxième extrémité immergée dans un bac de vidange, le siphon étant configuré pour permettre un passage de liquide depuis la première extrémité du tuyau vers le bac de vidange et pour empêcher un passage de liquide depuis le bac de vidange vers la première extrémité du tuyau. Le système de gestion des condensats peut être couplé au dispositif de stockage selon l'invention,
En particulier, chaque trou de vidange peut être couplé au bac de vidange par l'intermédiaire du siphon dont la première extrémité est couplée audit au moins un trou de vidange, le siphon étant configuré pour permettre un passage de liquide, par exemple un liquide formé de condensats, depuis le conteneur vers le bac de vidange et pour empêcher un passage de liquide depuis le bac de vidange vers le conteneur.

Si les trous de vidange restent à l'air libre, il est impossible de maitriser la pression à l'intérieur du conteneur.

La présence du siphon permet avantageusement d'éviter que les trous de vidanges ne soient à l'air libre et que le liquide présent dans le bac ne remonte dans le dispositif.

Le bac de vidange peut comporter un moyen de remplissage automatique dudit bac adapté pour verser un liquide de remplissage dans le bac de vidange tant que la quantité de liquide de remplissage dans le bac de vidange est inférieure à un seuil déterminé.

Selon un mode de réalisation, au moins une interface comporte un diffuseur comportant une pluralité de parois tronconiques coaxiales et qui est configuré pour faire circuler le fluide au travers d'espaces aménagés entre les parois entre une extrémité étroite du diffuseur distante du conteneur et une extrémité large du diffuseur couplée au conteneur.

Lorsque le diffuseur est placé sur la première interface permettant l'entrée du fluide, le diffuseur permet avantageusement de diffuser le fluide dans le conteneur, c'est-à-dire de le répartir dans tout le volume interne du dispositif et donc d'améliorer le transfert thermique.

Lorsque le diffuseur est placé sur la deuxième interface permettant la sortie du fluide, cela permet un meilleur écoulement du fluide vers l'extérieur du dispositif.

D'autres avantages et caractéristiques de l'invention apparaîtront à l'examen de la description détaillée de modes de mise en œuvre et de réalisation de l'invention, nullement limitatifs, et des dessins annexés présentés afin de faciliter l'intelligence de l'invention.

### BREVE DESCRIPTION DES FIGURES

Les figures sont présentées à titre indicatif et nullement limitatif de l'invention.

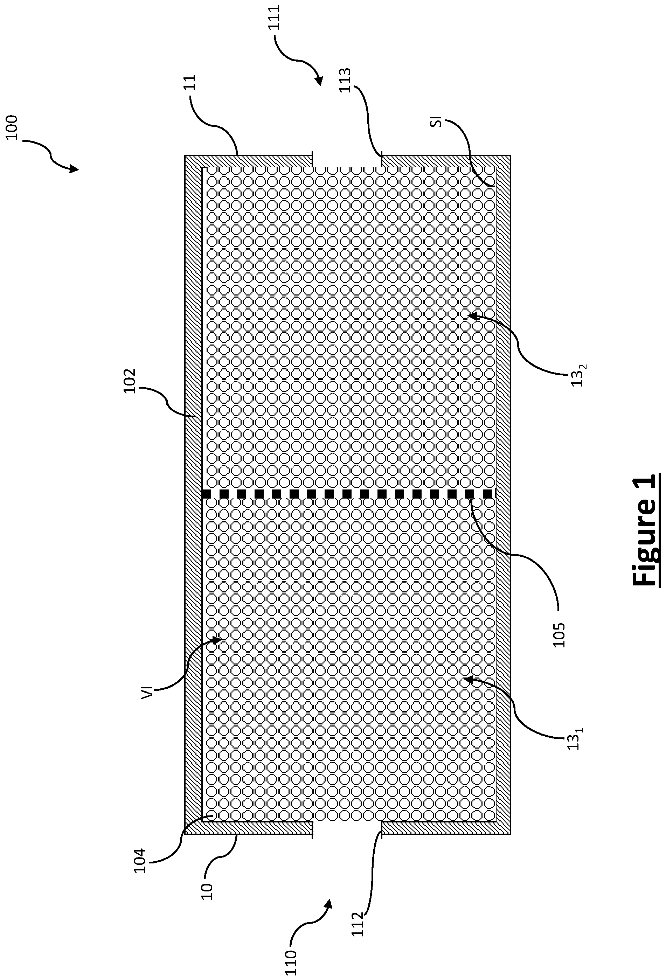

Les figures 1 à 5 représentent des modes de réalisation d'un dispositif selon l'invention.

### DESCRIPTION DETAILLEE

Sauf précision contraire, un même élément apparaissant sur des figures différentes présente une référence unique.

[Fig. 1] La figure 1 est une représentation schématique d'un premier exemple de réalisation non limitatif d'un dispositif de stockage 100 de calorie et/ou de frigorie selon l'invention.

Le dispositif de stockage 100 comprend un conteneur rigide, par exemple un conteneur comportant une paroi métallique 102, ici une paroi en acier dont l'épaisseur est comprise entre deux et huit millimètres, et préférentiellement de cinq millimètres d'épaisseur. Dans l'exemple présenté, le conteneur a la forme d'un cylindre droit circulaire et une première extrémité plane 10 du conteneur forme une première base du cylindre et une deuxième extrémité plane 11 du conteneur forme une deuxième base du cylindre.

Bien entendu, le conteneur pourrait tout aussi bien présenter tout autre forme, tel qu'un cylindre non-droit, et en particulier une forme prismatique, par exemple un parallélépipède.

Le dispositif 100 comporte un volume interne VI adapté à la circulation d'un fluide, notamment un fluide caloporteur, et délimité par une surface interne SI du dispositif 100. Dans ce mode de réalisation, la surface interne SI est définie par la paroi métallique 102. Le volume interne est ici un volume cylindrique.

Le dispositif 100 comprend en outre une pluralité d'éléments de stockage 104, disposés dans le volume interne VI du conteneur de façon à occuper au maximum le volume interne VI. Ici, les éléments de stockage 104 sont des billes en céramique réfractaire de 20 millimètres de diamètre. Cette céramique réfractaire est fabriquée à partir de matières premières conventionnelles comme l'alumine ou la bauxite, ou à partir de matières premières secondaires inorganiques, notamment les laitiers sidérurgiques, les cendres de charbon ou les cendres de biomasse. Bien entendu, les éléments de stockage pourraient avoir toute autre forme, toute autre dimension, en particulier une dimension comprise entre 10 millimètres et 50 millimètres, et être réalisés dans tout autre matériau réfractaire connu.

A des fins de simplification, un seul élément de stockage 104 est référencé sur la figure 1.

Le dispositif comporte en outre une première interface 110, ici une interface d'entrée, et une deuxième interface 111, ici une interface de sortie.

La première interface 110 et la deuxième interface 111 comportent respectivement un premier orifice 112 et un deuxième orifice 113 pratiqués dans la paroi métallique 102 du conteneur, respectivement au niveau de la première extrémité plane 10 et au niveau de la deuxième extrémité plane 11 de façon que le premier orifice 112 et le deuxième orifice 113 soit en vis-à-vis. Le premier orifice 112 et le deuxième orifice 113 sont adaptés à la fixation d'un conduit de circulation du fluide, en particulier un gaz.

Réaliser la première et la deuxième interface en vis-à-vis sur des parois opposées du conteneur est avantageux car cela permet une meilleure circulation du fluide au travers du dispositif 100, mais il serait tout à fait possible que les deux interfaces ne soient pas en vis-à-vis, et en particulier soient réalisées sur des faces non opposées du conteneur.

A titre d'exemple, la première interface 110 est ici adaptée à la fixation d'un conduit d'arrivé de fumée chaude issue d'un four industriel, et la deuxième interface 111 est ici adaptée à la fixation d'un conduit de sortie de ladite fumée industriel refroidie.

Bien qu'il soit décrit ici une seule première interface 110 et une seule deuxième interface 111, il serait tout à fait possible que le dispositif comporte plusieurs premières interfaces et plusieurs deuxièmes interfaces, et préférentiellement un nombre de premières interfaces égal au nombre de deuxièmes interfaces. Dans ce cas, les premières interfaces seraient toutes réalisées au niveau de la première extrémité plane 10 et les deuxièmes interfaces seraient toutes réalisées au niveau de la deuxième extrémité plane 11.

Il serait également possible que les orifices des premières et deuxièmes interfaces présentent des formes et dimensions différentes.

Le dispositif 100 comporte ici une paroi interne ajourée 105, par exemple ici une grille circulaire métallique dont les barreaux définissent des jours carrés de 15 millimètres de côté. Selon une variante de réalisation, la paroi ajourée 105 se présente sous la forme d'une plaque comprenant une pluralité de perçages uniformément répartis sur sa surface. Ces plaques sont par exemple et de manière non limitative de type caillebotis industriels réalisés dans le même matériau que le conteneur.

La paroi est disposée dans volume interne VI de façon à être parallèle aux extrémités planes 10 et 11, c'est-à-dire perpendiculaire à l'axe du cylindre formé par le conteneur, à égale distance de la première extrémité plane 10 et de la deuxième extrémité plane 11.

La paroi 105 est ici dimensionnée pour que son diamètre soit légèrement inférieur au diamètre interne du conteneur. Typiquement, le diamètre de la paroi 105 est inférieur de 5 mm au diamètre interne du conteneur pour éviter les contraintes mécaniques entre la paroi 105 et le conteneur. En outre, la paroi 105 est maintenue par au moins une butée (non représentée) soudée à la face interne de la paroi du conteneur.

Ainsi, la grille divise le volume interne VI du dispositif en un premier compartiment 13₁ et en un deuxième compartiment 13₂. Une première partie de la pluralité d'éléments de stockage est située dans le premier compartiment, et une deuxième partie de la pluralité d'élément de stockage est située dans le deuxième compartiment. Puisque les dimensions des éléments de stockage 104 sont supérieures aux dimensions des jours de la paroi ajourée 105, les éléments de stockage situés dans le premier compartiment 13₁ ne peuvent pas passer dans le deuxième compartiment 13₂, et les éléments de stockage situés dans le deuxième compartiment 13₂ ne peuvent pas passer dans le premier compartiment 13₁.

Ainsi, puisque chacun des compartiments présente ici un volume égal à la moitié du volume interne VI du conteneur 100, une variation d'un volume donné du conteneur correspondra à une variation d'un volume deux fois moins important dans chacun des compartiments.

En cas de dilatation du conteneur, les éléments de stockage dans chaque compartiment disposent donc d'un espace deux fois moins important pour se réorganiser, ce qui limite avantageusement le tassement.

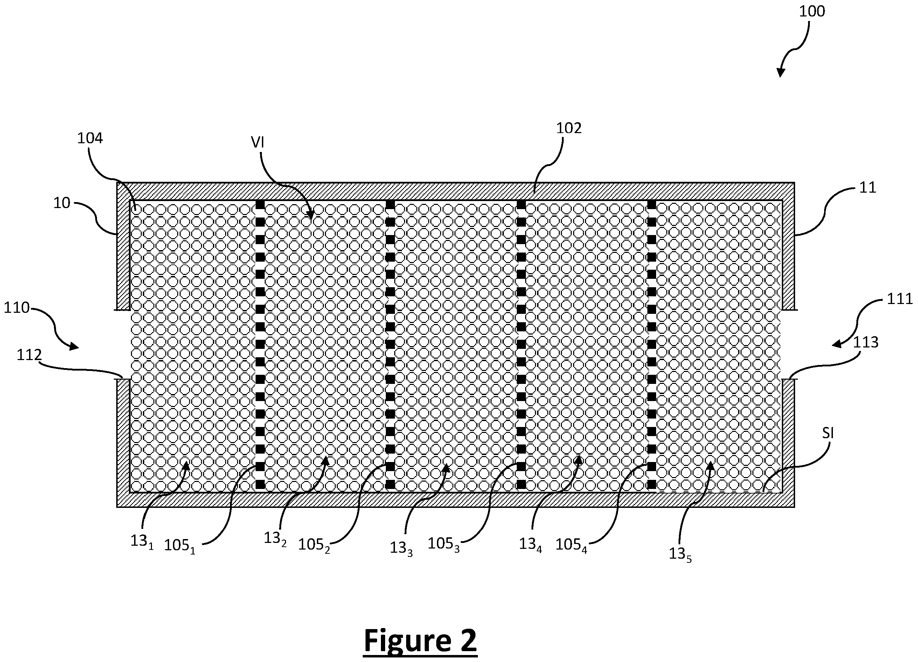

[Fig. 2] L'invention n'est pas limitée à un dispositif comportant une seule paroi interne ajourée. Ainsi, comme l'illustre la figure 2 le dispositif peut comprendre une pluralité de parois internes ajourées définissant une pluralité de compartiments.

Ici, le dispositif 100 comporte quatre parois internes ajourées 105₁, 105₂, 105₃, et 105₄ divisant le volume interne VI en cinq compartiments 13₁, 13₂, 13₃, 13₄, 13₅, de dimensions et de géométrie identiques.

Les cinq parois ajourées sont identiques à la paroi ajourée décrit précédemment en lien avec la figure 1, et sont réparties dans le conteneur de façon à définir cinq compartiments de dimensions identiques, la pluralité d'éléments de stockage étant répartie de façon égale dans les cinq compartiments.

Ainsi, puisque chacun des compartiments présente un volume égal au cinquième du volume total du conteneur, une variation absolue d'un volume donné du conteneur correspondra à une variation d'un volume cinq fois moins important dans chacun des compartiments.

Ainsi, en cas de dilatation du conteneur, les éléments de stockage disposent d'un espace encore moins important pour se réorganiser, ce qui limite encore davantage le tassement.

En particulier, un conteneur en inox 316 d'une longueur de quatre mètres à 25°C, et dont le coefficient de dilatation thermique est de 18*10⁻⁶/°C s'allonge de 37mm lorsque sa température atteint 500°C. La variation de longueur interne d'un compartiment est donc de 9,25 mm. Or, pour cette même différence de température, la dilation thermique des éléments de stockage dans un compartiment, dont le coefficient de dilatation thermique est de 2,4*10⁻⁶/°C, est de 1,2 mm. Il existe donc une distance longitudinale libérée dans chaque compartiment de 8,05 mm.

Or, pour éviter le réagencement des éléments de stockage, ces derniers doivent avoir un diamètre supérieur à cette distance libérée, et idéalement un diamètre au moins 1,5 fois supérieur à la distance longitudinale libérée dans chaque compartiment, soit au moins 12,75 mm dans ce dernier cas.

Une dilatation radiale existe également, générant une distance radiale libérée dans chaque compartiment. De la même manière, pour éviter le réagencement des éléments de stockage, ces derniers doivent avoir un diamètre supérieur à cette distance radiale libérée, et idéalement un diamètre au moins 1,5 fois supérieur à la distance radiale libérée dans chaque compartiment.

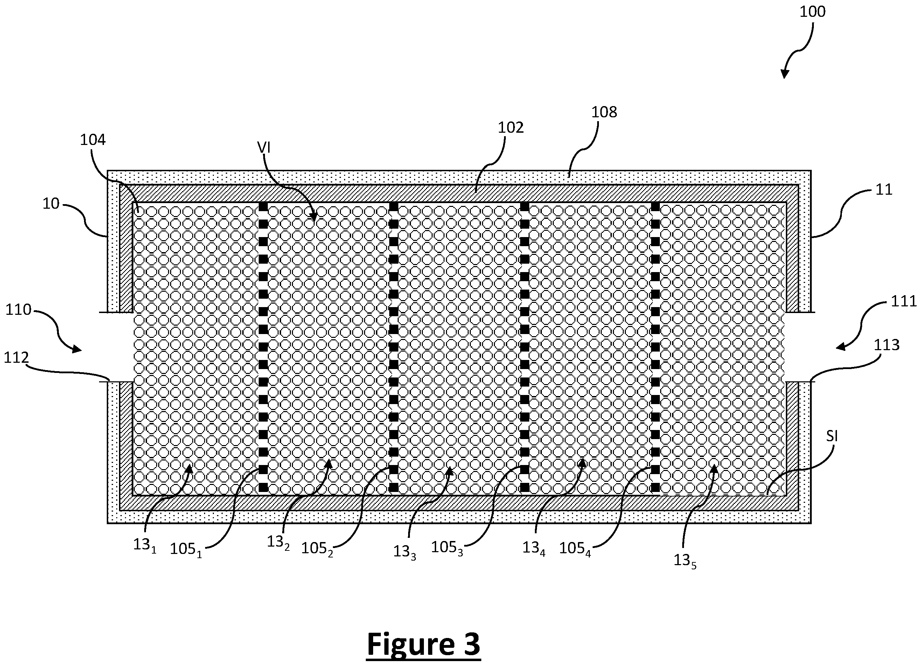

[Fig. 3] Selon un autre mode de réalisation de la cuve illustré sur la figure 3, le dispositif 100 comporte une couche thermiquement isolante 108 disposée à l'extérieur du conteneur autour de la paroi métallique 102 de façon à en recouvrir la surface externe. La couche thermiquement isolante 108 comporte ici un assemblage de panneaux de laine de roche. Elle présente une épaisseur de 300 millimètres.

Il serait toutefois possible que la couche thermiquement isolante 108 comporte tout autre matériau isolant, par exemple un matériau choisi parmi la laine de verre, la laine céramique, les panneaux de silicate de calcium ou les panneaux de vermiculite, et ait toute autre épaisseur, par exemple une épaisseur comprise entre 100 millimètres et 300 millimètres.

La couche thermiquement isolante 108 permet avantageusement d'éviter les pertes de chaleur vers l'extérieur du dispositif et donc d'en améliorer l'efficacité de stockage d'énergie calorifique.

Grace à la présence des parois internes ajourées, la dilatation de la paroi métallique 102 due au contact direct de la paroi métallique 102 avec les éléments de stockage 104 et avec le fluide caloporteur limite le tassement des éléments de stockage 104 dans chaque compartiment. Ainsi lors du refroidissement de la cuve, cette dernière retrouve son volume initial sans que les éléments de stockage 104 n'exercent de contraintes contre la paroi métallique 102. Ce mode de réalisation permet donc d'obtenir de façon simple un gain de place important dans le dispositif tout en limitant le phénomène de tassement. Ainsi, aucune isolation interne n'est nécessaire.

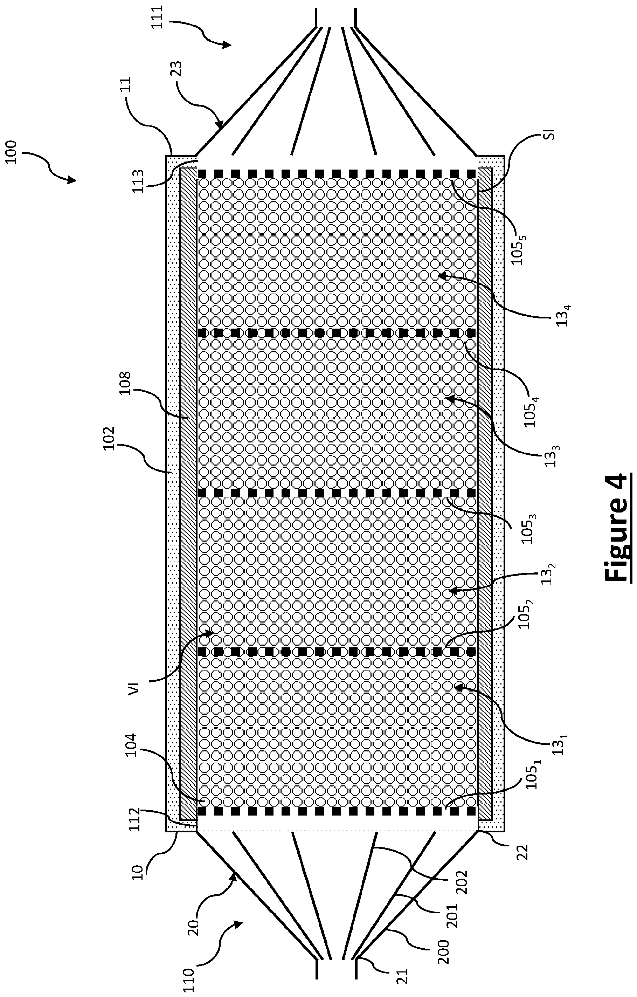

[Fig. 4] La figure 4 illustre un mode de réalisation préféré dans lequel la première interface 110 comporte un premier diffuseur 20 couplé au premier orifice 112 réalisé dans la paroi métallique 102 et dans la couche thermiquement isolante 108 et la deuxième interface 11 comporte un deuxième diffuseur 21 couplé au deuxième orifice 113 réalisé dans la paroi métallique 102 et dans la couche thermiquement isolante 108. Le premier diffuseur 20 et le deuxième diffuseur 23 sont ici identiques, ainsi seul le premier diffuseur 20 sera décrit ici à des fins de concision de l'exposé.

Le premier diffuseur comporte trois parois tronconique 200, 201, 202 agencées de façon coaxiale autour d'une portion de l'axe du cylindre formé par le conteneur s'étendant entre une extrémité étroite 21 du premier diffuseur 20 et une extrémité large 22 du premier diffuseur 20, l'extrémité étroite 21 présentant un diamètre inférieur au diamètre de l'extrémité large 22, ici un diamètre sept fois inférieur.

L'extrémité large 22 est couplée au premier orifice 112 qui a ici un diamètre égal au diamètre interne du dispositif, c'est-à-dire au diamètre du volume interne VI de la cuve.

L'extrémité étroite 21 du diffuseur 20 est distante du conteneur et adaptée à la fixation d'un conduit de circulation d'un fluide.

Ainsi un fluide circulant dans le premier diffuseur 20, par exemple ici depuis l'extrémité étroite 21 vers l'extrémité large 22 et le volume interne VI du dispositif 100, circulera dans les espaces aménagés entre les parois 200, 201, 202 jusqu'au volume interne VI du dispositif. Le fluide sera donc avantageusement diffusé de façon à occuper tout le volume interne VI lors de sa circulation.

Le fluide circulant dans le deuxième diffuseur 23 convergera depuis l'extrémité étroite du deuxième diffuseur 23, de plus grand diamètre, jusqu'à l'extrémité étroite du deuxième diffuseur 23, de plus petit diamètre.

Ainsi le deuxième diffuseur 23 permet avantageusement de faciliter la sortie du fluide caloporteur du dispositif.

Selon ce mode de réalisation, le dispositif 100 comporte cinq parois 105₁, 105₂, 105₃, 105₄, 105₅. Deux parois 105₁ et 105₅ sont situées respectivement au niveau du premier orifice 112 et au niveau du deuxième orifice 113 afin de maintenir les éléments de stockage dans le volume interne VI du dispositif 100. Trois parois 105₂, 105₃, 105₄, divisent le volume interne VI en quatre compartiments, c'est-à-dire en un premier compartiment 13₁, un deuxième compartiment 13₂, un troisième compartiment 13₃ et un quatrième compartiment 13₄.

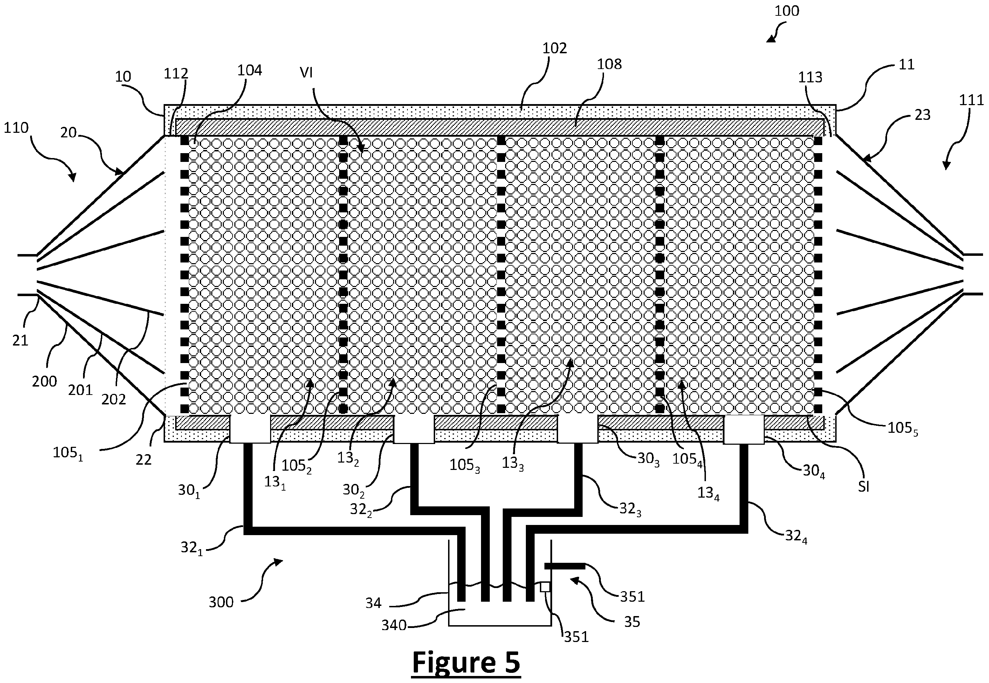

[Fig. 5] Selon un mode de réalisation illustré sur la figure 5, le dispositif 100 comporte un système de gestion des condensats 300. Le système de gestion des condensats 300 est ici couplé à un dispositif de stockage 100 selon le mode de réalisation décrit à la figure 4, mais pourrait être couplé à tout dispositif de stockage, en particulier un dispositif de stockage 100 selon l'un quelconque des modes de réalisation de l'invention.

Selon le mode de réalisation illustré par la figure 5, chaque compartiment comporte un orifice de vidange. Ici, le premier compartiment 13₁ comporte un premier orifice de vidange 30₁, le deuxième compartiment 13₂ comporte un deuxième orifice de vidange 30₂, le troisième compartiment 13₃ comporte un troisième orifice de vidange 30₃ et le quatrième compartiment 13₄ comporte un quatrième orifice de vidange 30₄. Les orifices de vidange 30₁, 30₂, 30₃, 30₄, sont réalisés dans la paroi métallique 102 et dans la couche thermiquement isolante 108, au niveau le plus bas du dispositif 100.

Ainsi, lors du fonctionnement en mode charge du dispositif 100, c'est à dire lors du passage d'un fluide caloporteur chaud entre la première interface 110 et la deuxième interface 111, par exemple le passage d'une fumée chaude issue d'un four industriel, les condensats résultant du refroidissement du fluide au contact des éléments de stockage plus froids s'écoulent par gravité vers le fond du volume interne VI et sont évacués par le système de gestion des condensats 300.

Lors du fonctionnement en mode charge du dispositif 100, une légère surpression par exemple de l'ordre de 20 millibars est appliquée à l'intérieur du conteneur, de manière à favoriser la circulation du fluide caloporteur. En outre, le dispositif possède également un mode de fonctionnement en décharge, au cours duquel passe un fluide caloporteur froid pour récupérer la chaleur stockée dans les éléments de stockage. Dans ce mode de fonctionnement en décharge, une légère dépression par exemple de l'ordre de 20 millibars est appliquée à l'intérieur du conteneur, de manière à favoriser la circulation du fluide froid.

Dans ces deux modes de fonctionnement du dispositif, il existe donc une différence de pression entre l'intérieur et l'extérieur du conteneur. Pour maintenir cet écart de pression malgré les orifices de vidange 30₁, 30₂, 30₃, 30₄, les premier, deuxième, troisième et quatrième orifices de vidanges 30₁, 30₂, 30₃ et 30₄, sont ici couplés respectivement à un premier, deuxième, troisième et quatrième tuyaux 32₁, 32₂, 32₃ et 32₄, chaque tuyau étant couplé à son orifice respectif par une première extrémité et comporte une deuxième extrémité immergée dans un bac de vidange 34 rempli d'un liquide de remplissage 340, ici de l'eau. Le bac de vidange 34 est situé à un niveau inférieur à celui des orifices 30₁, 30₂, 30₃ et 30₄. Chaque tuyau est ici doublement coudé et forme avec le bac de vidange 34 un siphon. Il existe donc une colonne d'eau dans chaque tuyau immergé dans le bac 34 dont la hauteur est suffisante pour compenser la surpression dans le conteneur en cas de charge de ce dernier, ou la dépression dans le conteneur en cas de décharge de ce dernier.

En outre, le siphon est également configuré pour permettre l'écoulement d'un liquide formé de condensats depuis le volume interne VI du dispositif 100 vers le bac de vidange 34, et pour empêcher la remontée de liquide depuis le bac de vidange 34 vers le volume interne VI du dispositif.

Afin de s'assurer que les tuyaux 32₁, 32₂, 32₃ et 32₄ restent immergés, le système de gestion des condensats 300 comporte un moyen de remplissage automatique du bac 35 comportant un détecteur de niveau 350 et une arrivée de liquide de remplissage 351, ici une arrivé d'eau, le détecteur de niveau 350 étant configuré pour commander l'ouverture de l'arrivée de liquide 351 lorsque le niveau de liquide de remplissage 340 dans le bac 34 est inférieure à un seuil, et pour commander la fermeture de l'arrivée de liquide 351 lorsque le niveau de liquide de remplissage 340 dans le bac 34 est égal ou supérieur au seuil.

De manière avantageuse, la surpression ou la dépression appliquée dans le conteneur suivant son état de fonctionnement étant de 20 millibars en valeur absolue, le seuil est équivalent à cette différence de pression en hauteur de colonne d'eau (c'est-à-dire 200 mm), auquel une marge de sécurité de 50 mm de hauteur de colonne d'eau est ajoutée. Ainsi, on évite la remontée de liquide depuis le bac de vidange 34 vers le volume interne VI du dispositif 100 en cas de dépression du conteneur, et on évite également de purger les tuyaux 32₁, 32₂, 32₃ et 32₄ en cas de surpression dans le volume VI du dispositif 100, ce qui aurait pour effet de créer une fuite d'air chaud par les orifices de vidange 30₁, 30₂, 30₃ et 30₄.

Bien que le système de gestion des condensats ait été décrit ici comme étant couplé à un dispositif 100 selon le mode de réalisation décrit en lien avec la figure 1, le système de gestion des condensats 300 est compatible avec tous les modes de réalisation de l'invention, en particulier les modes de réalisation décrits en lien avec les figures 1 à 5. En outre, le système de gestion de condensats peut être appliqué à n'importe quelle cuve ou récipient pour lesquels une évacuation et une récupération des condensats est nécessaire. Selon les modes de réalisation, un dispositif 100 comportant le système de gestion des condensats 300 peut comporter un seul orifice de vidange dans chaque compartiment, plusieurs orifices de vidanges dans chaque compartiment ou encore un ou plusieurs orifices dans certains seulement des compartiments.

Quel que soit le mode de réalisation de l'invention, le conteneur cylindrique 100, lorsqu'il présente une longueur supérieure à son diamètre, est disposé horizontalement sur le sol, c'est-à-dire que la directrice du cylindre est orientée parallèlement au plan dans lequel s'étend le sol sur lequel le conteneur 100 repose. Cette disposition du conteneur 100 offre le double avantage d'une part de faciliter le transport des conteneur 100 et d'autre part de limiter la hauteur de la répartition des éléments de stockage 104. De fait, la force induite par gravité et exercée par les éléments de stockage 104 sur la paroi inférieure du conteneur 100 est limitée.

Les modes de réalisation décrit ci-dessus ne sont nullement limitatifs, et des modifications peuvent y être apportées sans sortir du cadre de l'invention. A titre d'exemple, dans le cadre de conteneurs de diamètre particulièrement important, il est avantageux de cloisonner le volume interne par au moins une paroi pleine s'étendant dans le sens de la longueur du cylindre, parallèlement à son axe longitudinal, pour former un volume haut et un volume bas. Un tel conteneur comprend des plaques ajourées s'étendant perpendiculairement à l'axe longitudinal du conteneur, et qui sont réparties dans le volume haut et dans le volume bas du conteneur. A l'instar des plaques ajourées, cette paroi horizontale repose sur des supports solidaires de la paroi du conteneur. Une telle conformation du conteneur permet de limiter la stratification de la température dans le conteneur lorsque les éléments de stockage sont chargés en énergie calorifique.

## Revendications

1. Dispositif de stockage de calories/frigories comprenant
- un conteneur comportant une paroi (102) comportant une première interface (110) adaptée à l'entrée d'un fluide dans le dispositif (100) et une deuxième interface (111) adaptée à la sortie du fluide du dispositif (100),
- une pluralité d'éléments de stockage (104) disposés dans ledit conteneur et configurés pour emmagasiner des calories/frigories fournies par le fluide,
lequel conteneur comporte au moins une paroi interne ajourée (105, 105₁, 105₂, 105₃, 105₄, 105₅) comportant des jours de dimensions inférieures aux dimensions des éléments de stockage (102) et définissant un premier compartiment (13₁) et au moins un deuxième compartiment (13₂) dans le conteneur, la pluralité d'éléments de stockage étant répartie dans le premier compartiment (13₁) et dans ledit au moins un deuxième compartiment (13₂), **caractérisé en ce que** le dispositif comporte des trous de vidange (30₁, 30₂, 30₃, 30₄) de condensats hors du dispositif de stockage,
lesquels trous de vidange (30₁, 30₂, 30₃, 30₄) sont distincts des première et deuxième interfaces (110, 111) et sont réalisés dans la paroi (102) du conteneur au niveau le plus bas de la paroi dudit conteneur, et **en ce que** chaque compartiment (13₁, 13₂) comporte un trou de vidange (30₁, 30₂, 30₃, 30₄).

2. Dispositif selon la revendication précédente, **caractérisé en ce qu'**il comprend une pluralité de parois internes ajourées (105₁, 105₂, 105₃, 105₄, 105₅).

3. Dispositif selon la revendication 1 ou 2, comportant une couche thermiquement isolante (108) disposée autour de la paroi (102) du conteneur.

4. Dispositif selon l'une quelconque des revendications 1 à 3, dans lequel le conteneur est de forme cylindrique, ladite au moins une paroi interne ajourée (105) étant perpendiculaire à l'axe du cylindre.

5. Dispositif selon l'une quelconque des revendications 1 à 4, dans lequel le conteneur est de forme cylindrique, ladite au moins une paroi interne ajourée (105) étant parallèle à l'axe du cylindre.

6. Dispositif selon l'une quelconque des revendications 1 à 5, dans lequel la largeur de chaque compartiment est inférieure à 25 fois la dimension maximale d'un élément de stockage.

7. Dispositif selon l'une quelconque des revendications 1 à 6, dans lequel chaque élément de stockage (104) présente une dimension maximale comprise entre 10 millimètres et 50 millimètres.

8. Dispositif selon l'une quelconque des revendications précédentes, **caractérisé en ce qu'**il comprend au moins une ouverture de remplissage réalisée dans la paroi du conteneur au niveau le plus haut de la paroi du conteneur.

9. Dispositif selon l'une quelconque des revendications précédentes, dans lequel chaque trou de vidange (30₁, 30₂, 30₃, 30₄) peut être couplé à un bac de vidange (34) par l'intermédiaire d'un siphon comportant un tuyau (32₁, 32₂, 32₃, 32₄) ayant une première extrémité couplée au bac de vidange (30₁, 30₂, 30₃, 30₄) et une deuxième extrémité immergée dans un bac de vidange (34), le siphon étant configuré pour permettre un passage de liquide depuis le conteneur vers le bac de vidange (34) et pour empêcher un passage de liquide depuis le bac de vidange (34) vers le conteneur.

10. Dispositif selon la revendication 9, dans lequel le bac de vidange (34) comporte un moyen (35) de remplissage automatique dudit bac de vidange (34) adapté pour verser un liquide de remplissage (340) dans le bac de vidange (34) tant que la quantité de liquide de remplissage (340) dans le bac de vidange (34) est inférieure à un seuil déterminé.

11. Dispositif selon l'une quelconque des revendications précédentes, dans lequel au moins une interface (110, 111) comporte un diffuseur (20, 21) comportant une pluralité de parois tronconiques coaxiales (200, 201, 202) et configuré pour faire circuler le fluide au travers d'espaces aménagés entre les parois coaxiales entre une extrémité étroite 21 du diffuseur distante du conteneur et une extrémité large (22) du diffuseur couplée au conteneur.

## Patentansprüche

1. Vorrichtung zur Speicherung von Kalorien/Frigorien, umfassend
- einen Behälter, der eine Wand (102) aufweist, die eine erste Schnittstelle (110), die für den Eintritt eines Fluids in die Vorrichtung (100) eingerichtet ist, und eine zweite Schnittstelle (111), die für den Austritt des Fluids aus der Vorrichtung (100) eingerichtet ist, aufweist,
- mehrere Speicherelemente (104), die in dem Behälter angeordnet sind und dafür ausgelegt sind, von dem Fluid gelieferte Kalorien/Frigorien zu speichern,
wobei der Behälter mindestens eine durchbrochene Innenwand (105, 105₁, 105₂, 105₃, 105₄, 105₅) aufweist, die Durchbrüche mit Abmessungen, die kleiner als die Abmessungen der Speicherelemente (102) sind, aufweist und einen ersten Teilraum (13₁) und mindestens einen zweiten Teilraum (13₂) in dem Behälter definiert, wobei die mehreren Speicherelemente in dem ersten Teilraum (13₁) und in dem mindestens einen zweiten Teilraum (13₂) verteilt sind, **dadurch gekennzeichnet, dass** die Vorrichtung Löcher für den Ablauf (30₁, 30₂, 30₃, 30₄) von Kondensaten aus der Vorrichtung zur Speicherung aufweist,
wobei diese Ablauflöcher (30₁, 30₂, 30₃, 30₄) von der ersten und zweiten Schnittstelle (110, 111) verschieden sind und in der Wand (102) des Behälters auf der niedrigsten Höhe der Wand des Behälters ausgebildet sind, und dadurch, dass jeder Teilraum (13₁, 13₂) ein Ablaufloch (30₁, 30₂, 30₃, 30₄) aufweist.

2. Vorrichtung nach dem vorhergehenden Anspruch, **dadurch gekennzeichnet, dass** sie mehrere durchbrochene Innenwände (105₁, 105₂, 105₃, 105₄, 105₅) umfasst.

3. Vorrichtung nach Anspruch 1 oder 2, welche eine thermisch isolierende Schicht (108) aufweist, die um die Wand (102) des Behälters herum angeordnet ist.

4. Vorrichtung nach einem der Ansprüche 1 bis 3, wobei der Behälter von zylindrischer Form ist, wobei die mindestens eine durchbrochene Innenwand (105) senkrecht zur Achse des Zylinders ist.

5. Vorrichtung nach einem der Ansprüche 1 bis 4, wobei der Behälter von zylindrischer Form ist, wobei die mindestens eine durchbrochene Innenwand (105) parallel zur Achse des Zylinders ist.

6. Vorrichtung nach einem der Ansprüche 1 bis 5, wobei die Breite jedes Teilraums kleiner als das 25-Fache der maximalen Abmessung eines Speicherelements ist.

7. Vorrichtung nach einem der Ansprüche 1 bis 6, wobei jedes Speicherelement (104) eine maximale Abmessung zwischen 10 Millimetern und 50 Millimetern aufweist.

8. Vorrichtung nach einem der vorhergehenden Ansprüche, **dadurch gekennzeichnet, dass** sie mindestens eine Einfüllöffnung umfasst, die in der Wand des Behälters auf der höchsten Höhe der Wand des Behälters ausgebildet ist.

9. Vorrichtung nach einem der vorhergehenden Ansprüche, wobei jedes Ablaufloch (30₁, 30₂, 30₃, 30₄) mit einer Ablaufwanne (34) über einen Siphon gekoppelt ist, der einen Schlauch (32₁, 32₂, 32₃, 32₄) mit einem ersten Ende, das mit dem Ablaufloch (30₁, 30₂, 30₃, 30₄) gekoppelt ist, und einem zweiten Ende, das in eine Ablaufwanne (34) eingetaucht ist, aufweist, wobei der Siphon dafür ausgelegt ist, einen Durchgang von Flüssigkeit vom Behälter zur Ablaufwanne (34) zu ermöglichen und einen Durchgang von Flüssigkeit von der Ablaufwanne (34) zum Behälter zu verhindern.

10. Vorrichtung nach Anspruch 9, wobei die Ablaufwanne (34) ein Mittel (35) zum automatischen Auffüllen der Ablaufwanne (34) aufweist, das dazu eingerichtet ist, eine Füllflüssigkeit (340) in die Ablaufwanne (34) zu schütten, solange die Menge an Füllflüssigkeit (340) in der Ablaufwanne (34) kleiner als ein bestimmter Schwellenwert ist.

11. Vorrichtung nach einem der vorhergehenden Ansprüche, wobei mindestens eine Schnittstelle (110, 111) einen Zerstäuber (20, 21) aufweist, der mehrere koaxiale kegelstumpfförmige Wände (200, 201, 202) aufweist und dafür ausgelegt ist, das Fluid durch zwischen den koaxialen Wänden angeordnete Räume zwischen einem schmalen Ende (21) des Zerstäubers, das vom Behälter entfernt ist, und einem breiten Ende (22) des Zerstäubers, das mit dem Behälter gekoppelt ist, strömen zu lassen.

## Claims

1. A device for storing heat energy/cold energy, comprising
- a container comprising a wall (102) comprising a first interface (110) suitable for letting a fluid into the device (100) and a second interface (111) suitable for letting the fluid out of the device (100),
- a plurality of storage elements (104) arranged in said container and configured to store heat energy/cold energy supplied by the fluid,
which container has at least one perforated internal wall (105, 105₁, 105₂, 105₃, 105₄, 105₅) comprising openings of dimensions smaller than the dimensions of the storage elements (102) and defining a first compartment (13₁) and at least one second compartment (13₂) in the container, the plurality of storage elements being distributed in the first compartment (13₁) and in said at least one second compartment (13₂),
**characterized in that** the device comprises drainage holes (30₁, 30₂, 30₃, 30₄) for draining condensates out of the storage device, which drainage holes (30₁, 30₂, 30₃, 30₄) are distinct from the first and second interfaces (110, 111) and are made in the wall (102) of the container at the lowest level of the wall of said container, and **in that** each compartment (13₁, 13₂) has a drainage hole (30₁, 30₂, 30₃, 30₄).

2. The device as claimed in the preceding claim, **characterized in that** it comprises a plurality of perforated internal walls (105₁, 105₂, 105₃, 105₄, 105₅).

3. The device as claimed in claim 1 or 2, comprising a thermally insulating layer (108) arranged around the wall (102) of the container.

4. The device as claimed in any one of claims 1 to 3, wherein the container is cylindrical in shape, said at least one perforated internal wall (105) being perpendicular to the axis of the cylinder.

5. The device as claimed in any one of claims 1 to 4, wherein the container is cylindrical in shape, said at least one perforated internal wall (105) being parallel to the axis of the cylinder.

6. The device as claimed in any one of claims 1 to 5, wherein the width of each compartment is less than 25 times the maximum dimension of a storage element.

7. The device as claimed in any one of claims 1 to 6, wherein each storage element (104) has a maximum dimension of between 10 millimeters and 50 millimeters.

8. The device as claimed in any one of the preceding claims, **characterized in that** it comprises at least one filling opening made in the wall of the container at the highest level of the wall of the container.

9. The device as claimed in any one of the preceding claims, wherein each drainage hole (30₁, 30₂, 30₃, 30₄) can be coupled to a drainage pan (34) by means of a siphon comprising a pipe (32₁, 32₂, 32₃, 32₄) having a first end coupled to the drainage pan (30₁, 30₂, 30₃, 30₄) and a second end submerged in a drainage pan (34), the siphon being configured to allow liquid to pass from the container to the drainage pan (34) and to prevent liquid from passing from the drainage pan (34) to the container.

10. The device as claimed in claim 9, wherein the drainage pan (34) comprises means (35) for automatically filling said drainage pan (34) suitable for pouring a filling liquid (340) into the drainage pan (34) as long as the quantity of filling liquid (340) in the drainage pan (34) is below a determined threshold.

11. The device as claimed in any one of the preceding claims, wherein at least one interface (110, 111) comprises a diffuser (20, 21) having a plurality of coaxial frustoconical walls (200, 201, 202) and configured to circulate the fluid through spaces provided between the coaxial walls between a narrow end (21) of the diffuser remote from the container and a wide end (22) of the diffuser coupled to the container.
